# EUROPEAN PATENT APPLICATION

(11) **EP 4 848 652 A1**
(43) Date of publication of application: **02.12.2026**
(21) Application number: 25382539.2
(22) Date of filing: 28.05.2025
(51) Int. Cl.: H04L 9/08

(54) **METHOD AND SYSTEM FOR SECURE COMMUNICATION BETWEEN COMMUNICATING DEVICES**

(71) Applicant: Telefonica Innovacion Digital SLU, 28050 Madrid (ES)
(72) Inventor: Yang, Xiaoyuan, 28050 Madrid (ES); Santacatalina Gea, Alfred, 28050 Madrid (ES); Nieto Pastor, Antonio, 28050 Madrid (ES); Garcia Abril, Christopher, 28050 Madrid (ES); Stalling, Lars, 28050 Madrid (ES)
(74) Representative: Carlos Hernando, Borja

(57) **Abstract**

A method and system for secure communication between communicating devices are provided. The method comprises associating a manager device with a group of peer communication devices; sharing, by the manager device, with each peer communication device of the group of peer communication devices: a first cryptographic public key for a first cryptographic protocol, a second cryptographic public key for a second cryptographic protocol, the latter comprising a post-quantum cryptographic protocol, and a dynamically changeable Peer-Manager Shared Key; and encrypting all messages exchanged between the manager device and each peer communication device by means of a quantum-safe encryption mechanism, which comprises i) encrypting a message body using the Peer-Manager Shared key, and ii) further encrypting the encrypted message body using random session keys exchanged using both the first cryptographic protocol and the second cryptographic protocol, such that secure communication between each peer communication device and the manager device is guaranteed.

## Description

### TECHNICAL FIELD

The present invention relates to techniques for secure communication between communicating devices.

### BACKGROUND OF THE INVENTION

The rapid development of quantum computing has introduced both ground breaking opportunities and significant threats to existing cybersecurity infrastructures. One of the most critical concerns arises from Shor's algorithm, which enables quantum computers to efficiently factorize large numbers into two prime numbers. This poses a direct threat to classical cryptographic systems such as RSA and ECC, which rely on the computational difficulty of prime factorization as their foundation.

Quantum computers can also employ Grover's algorithm to search for keys in a symmetric cipher like AES at a square root speed-up. For instance, AES-128 would have its effective strength reduced to AES-64, which is not secure by modern standards. However, increasing the number of bits can effectively mitigate these types of attacks. For example, AES-256 provides better resistance, as its effective strength would be reduced to 128 bits, still considered secure.

Quantum computers pose a significant threat to the security of traditional VPN services like OpenVPN and IPsec because these protocols rely heavily on cryptographic algorithms for authentication and key exchange. Many VPNs utilize RSA (Rivest-Shamir-Adleman) or ECDSA (Elliptic Curve Digital Signature Algorithm) for key exchange and authentication. Quantum computers, equipped with Shor's algorithm, can factorize large integers and solve discrete logarithms exponentially faster than classical computers. This renders RSA, DSA, and ECDSA insecure against sufficiently powerful quantum computers. Solutions such as CN118540165A and CN118540163A propose addressing this issue by integrating quantum keys into VPN services.

The industry is developing Quantum Key Distribution (QKD) solutions to enable VPN services to exchange keys securely. QKD utilizes principles of quantum mechanics to encode key information, making it impossible (according to known physical laws) to intercept without detection. Various protocols are available, such as BB84. The primary challenge of QKD solutions is the physical limitations and cost associated with current implementations. With existing technology, encoded information can only be transmitted over distances less than 100 km.

The industry also has defined the interface between QKD solutions and VPN vendors in the form of standards. Definitions such as ETSI-014 [1] outline the required interactions through REST APIs to enable VPN solutions to request and establish shared keys between two endpoints. Cisco, on the other hand, defines its own proprietary protocol called SKIP [2], which operates similarly to ETSI-014.

Quantum key distribution (QKD) is considered the solution for secure key exchange, although it requires further industry development in the coming years. Concurrently, post-quantum cryptography (PQC) algorithms are being developed to replace traditional asymmetric algorithms by utilizing mathematical problems that are anticipated to remain difficult for future quantum computers to solve. The National Institute of Standards and Technology (NIST) is overseeing the selection process, with the first standard expected by August 2024.

Current PQC algorithms like Kyber, Dilithium, and SPHINCS+ have undergone testing but lack the extensive scrutiny of classical algorithms like RSA or AES. Their novelty poses challenges, including potential hardware/software issues, theoretical vulnerabilities, and undiscovered weaknesses. To mitigate risks, some propose using multiple encapsulations.

"Store now and decrypt later" attacks highlight the urgency of transitioning to post-quantum security. Though implementing PQC today could safeguard data, any flaws might render it vulnerable in the future. This transition requires urgent, rigorous testing and robust implementation.

To mitigate SNDL attack risks, a multi-layered approach is employed. Hybrid cryptographic systems utilize classical and post-quantum algorithms for key exchanges and signatures. Ephemeral key exchanges reduce the long-term value of compromised keys. Data owners may shorten retention periods for sensitive data to minimize the lifespan of intercepted ciphertext. The SNDL attack involves associated costs. In VPN services, for instance, it necessitates identifying and storing the target data for a prolonged duration. Both encrypted data and key exchange packets must be intercepted and stored. The loss of any key exchange packet renders it impossible to recover the cipher-key and the encrypted data.

### References:

[1]https://www.etsi.org/deliver/etsi_gs/QKD/001_099/014/01.01.01_60/gs_qkd014v010 101p.pdf
[2] https://datatracker.ietf.org/doc/draft-cisco-skip/

### DESCRIPTION OF THE INVENTION

The object of present invention is thus to provide a new solution to establish shared session keys between two points in communication. The system utilizes distributed machines, known as peer communication devices, which connect directly with an underlay application (e.g. a VPN), for instance, using ETSI-014 or Cisco's SKIP protocol. All peer communication devices are connected to a manager device that generates shared session keys. Communication between the management device and peers employs a post-quantum cryptographic protocol combined with an encryption mechanism that participate all historical data exchanged between manager and the peer. With this proposal, a hacker would need to intercept all the data exchanged between the manager and the peer before being able to decrypt the message. If any data is lost in the interception process, the hacker will not be able to recover the message. This increases the difficulty in decrypting intercepted shared session keys using future quantum computers.

This object is fulfilled by a method with the features of claim 1 and by a system with the features of claim 12.

To that end, the present invention proposes, according to one aspect, a method for secure communication between communicating devices, the method comprising associating a manager device with a group of peer communication devices; sharing, by the manager device, with each peer communication device of the group of peer communication devices: a first cryptographic public key for a first cryptographic protocol, a second cryptographic public key for a second cryptographic protocol, the latter comprising a post-quantum cryptographic protocol, and a dynamically changeable Peer-Manager Shared Key; and encrypting all messages exchanged between the manager device and each peer communication device by means of a quantum-safe encryption mechanism, which comprises i) encrypting a message body using the Peer-Manager Shared key, and ii) further encrypting the encrypted message body using random session keys exchanged using both the first cryptographic protocol and the second cryptographic protocol, such that secure communication between each peer communication device and the manager device (300) is guaranteed.

According to the invention, the first cryptographic protocol can comprise the Rivest-Shamir-Adleman (RSA) protocol, the Diffie-Hellman protocol, or the Elliptic Curve Integrated Encryption Scheme-KEM version (ECIES-KEM) protocol, among others. The second cryptographic protocol can comprise the post-quantum cryptography (PQC) protocol or the Module-Lattice-based Key Encapsulation Mechanism (ML-KEM) protocol.

According to the invention, each peer communication device and the manager device maintain a seed pool with same state that changes dynamically, where each seed in the seed pool is identified by a unique identifier that is assigned by the manager device and is used for generating the Peer-Manager Shared Key.

In some embodiments, a given peer communication device further changes the state of the seed pool by generating and sending to the manager device a message comprising the identifier of the Peer-Manager Shared Key and an encrypted body message, the latter comprising a) a new random seed together with an accumulation function indicating which action is to be performed in the seed pool, or b) a new random seed, an accumulation function indicating which action is to be performed in the seed pool, and the identifier of a previously available seed in the seed pool.

In some embodiments, for a), the accumulation function comprises an ADD function in which the new random seed is to be added into the seed pool. On the other hand, for b), it can comprise: a REMOVE function in which the previously available seed is to be removed from the seed pool; an ADD-REPLACE function in which a content of the previously available seed is concatenated with the new random seed, a result thereof being further hashed and used to replace the previously available seed in the seed pool; a XOR-REPLACE function in which a content of the previously available seed is mixed with the new random seed, a result thereof being further hashed and used to replace the previously available seed in the seed pool; an ADD-REPLACE-ODD function in which a content of the previously available seed is concatenated with the new random seed, a result thereof being further hashed and combined with the previously available seed with odd identification; or an ADD-REPLACE-EVEN function in which a content of the previously available seed is concatenated with the new random seed, a result thereof being further hashed and combined with the previously available seed with even identification.

In some embodiments, the method further comprises generating, by a given peer communication device of the group of peer communication devices, a new random seed; selecting, by the given peer communication device, information comprising a given accumulation function indicating which action is to be performed in the seed pool and a given marker, the given marker indicating that the new random seed is to be added to the seed pool or indicating a previously available seed in the seed pool that is to be removed or replaced; sending, by the given peer communication device, the selected information to the manager device, a request message body containing the selected information being encrypted via the quantum-safe encryption mechanism, wherein the manager device upon reception, further decrypts the request message body, performs the accumulated function, and changes the state of the seed pool; receiving, by the given peer communication device, from the manager device, the identifier of the added/removed/replaced seed, a response message body containing the identifier being encrypted via the quantum-safe encryption mechanism, the given peer communication device further decrypting the response message body and changing the state of the seed pool.

In some embodiments, the method also comprises generating, by a given peer communication device of the group of peer communication devices, a new random seed; selecting, by the given peer communication device, information comprising a given accumulation function indicating which action is to be performed in the seed pool and a given marker, the given marker indicating that the new random seed is to be added to the seed pool or indicating a previously available seed in the seed pool that is to be removed or replaced; selecting, by the given peer communication device, a seed in the seed pool to be used for generating a new Peer-Manager Shared Key; sending, by the given peer communication device, within a request message, the selected information together with the identifier of the selected seed to the manager device, a request message body being encrypted via the quantum-safe encryption mechanism, wherein the manager device upon reception, further decrypts the request message body, performs the accumulated function, changes the state of the seed pool, computes the new Peer-Manager Shared Key using the identifier and provides a new identifier to the new Peer-Manager shared key; receiving, by the given peer communication device, from the manager device, the new identifier, a response message body containing the new identifier being encrypted via the quantum-safe encryption mechanism, the given peer communication device in response, further decrypting the response message body and changes the state of the seed pool with the new Peer-Manager shared key and the new identifier.

In some embodiments, step i) comprises providing two random or pseudo-random nonces to the message body, obtaining an extended message body as a result, and storing the extended message body into a first protocol buffer; obtaining first data by serializing the first protocol buffer; and encrypting the first data using an advanced symmetric encryption algorithm with the Peer-Manager Shared Key, obtaining the encrypted message body as a result, the encrypted message body together with an identifier of the Peer-Manager Shared Key and two random or pseudo-random nonces being further stored in a second protocol buffer, obtaining second data as a result.

In some embodiments, step ii) comprises obtaining an encrypted message by encrypting the second data with the advanced symmetric encryption algorithm, a key used by the advanced symmetric encryption algorithm being derived from a hash function whose input comprises the random session keys, the latter comprising a first random session key of the first cryptographic protocol and a second random session key of the second cryptographic protocol; encapsulating the first random session key of the first cryptographic protocol using the first cryptographic public key, generating a first cryptographic protocol encapsulated key as a result; encapsulating the second random session key of the second cryptographic protocol using the second cryptographic public key, generating a second cryptographic protocol encapsulated key as a result; and aggregating the obtained encrypted message, first cryptographic protocol encapsulated key, and second cryptographic protocol Encapsulated key within a third protocol buffer, which is ready to be serialized and exchanged between the manager device (300) and the peer communication device.

In some embodiments, the advanced symmetric encryption algorithm comprises an AES-256 algorithm.

In some embodiments, each peer communication device of the group of peer communication devices is further associated with a corresponding application instance, in this case, the method further comprises receiving, by the manager device, from a first peer communication device, a message request for a shared session key to be used by its associated first application instance to communicate with a second application instance, the message body of the message request comprising an identifier of the Peer-Manager Shared Key and an identifier of the second application instance, and being encrypted via the quantum-safe encryption mechanism; generating and storing, by the manager device, the shared session key, and further forwarding the generated shared session key and an identifier of the shared session key to the first peer communication device, the shared session key and their identifier being forwarded within the message body of a response message that is encrypted using the quantum-safe encryption mechanism; generating, by the first peer communication device, a first final shared session key for the first application instance and the second application instance by combining the shared session key with a first local session key using a cryptographic function, the first local session key being generated by the first peer communication device; associating, by the first communication device, the first final shared session key with a first final shared session key identifier, the first final shared session key identifier including the first local session key and the identifier of the shared session key; sending, by the peer first communication device, the associated first final shared session key and first final shared session key identifier to the first application instance, the first application instance further sharing the first final shared session key identifier with the second application instance, which, in response, further requests the shared session key to its associated second peer communication device; receiving, by the manager device, from the second peer communication device, a message request for the shared session key, the message body of the message request comprising the identifier of the shared session key and being encrypted using the quantum-safe encryption mechanism, the manager device, in response, retrieving the shared session key, and further forwarding the shared session key and the identifier of the shared session key to the second peer communication device, the shared session key and their identifier being forwarded within the message body of a response message that is encrypted using the quantum-safe encryption mechanism; generating, by the second peer communication device, a second final shared session key for the second application instance by combining the shared session key with a second local session key using a cryptographic function, the second local session key being generated by the second communication device; and associating, by the second peer communication device, the second final shared session key with a second final shared session key identifier, the second final shared session key identifier including the second local session key and the identifier of the shared session key; and sending, by the second peer communication device, the associated second final shared session key and second final session shared key identifier to the second application instance.

In some embodiments, the cryptographic function used by the first and second peer communication devices in the generating step comprises a hash function.

Present invention also proposes, according to another aspect, a system for secure communication between communicating devices, the system comprises at least one peer communication device and a manager device configured to share with the at least one peer communication device a first cryptographic public key for a first cryptographic protocol, a second cryptographic public key for a second cryptographic protocol, the latter comprising a post-quantum cryptographic protocol, and a dynamically changeable Peer-Manager Shared Key.

In the proposed system, all messages exchanged between the manager device and the peer communication device are encrypted using a quantum-safe encryption mechanism, which comprises encrypting a message body using the Peer-Manager Shared Key, and further encrypting the encrypted message body using random session keys exchanged using both the first cryptographic protocol and the second cryptographic protocol.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Thus, the present invention proposes a mechanism to establish shared session keys between two points in communication, utilizing distributed machines known as peers and a management device. All communications between peers and the manager are encrypted using shared keys exchanged through different cryptographic protocols.

The manager device establishes a Peer-Manager Shared Key for each peer, which changes dynamically according to a specific protocol that involves two concurrent subprocesses. Moreover, the peer and the manager maintain a seed pool with same state that changes constantly. This dynamic nature makes it difficult for an attacker to predict or intercept all messages required to reconstruct the state in any moment. The seed pool state is then used to generate shared keys between peer and manager. This ensures that communication between peer and manager are secure and resistant to quantum attacks.

All peers expose ETSI-014 and Ciscos's SKIP interface to allow sure applications to establish session keys between instances, while ensuring that all session keys are securely transmitted in the network, providing quantum safeness.

### BRIEF DESCRIPTION OF THE DRAWINGS

The previous and other advantages and features will be more fully understood from the following detailed description of embodiments, with reference to the attached figures, which must be considered in an illustrative and non-limiting manner, in which:
Fig. 1 illustrates a high-level architecture of a system for secure communication between communicating devices, according to an embodiment of the present invention.
Fig. 2 schematically illustrates an embodiment of the accumulated functions that can be performed by the present invention.
Fig. 3 is a flow chart illustrating the random shared seed pool convergent protocol, according to an embodiment.
Fig. 4 is a flow chart illustrating the Peer-Manager shared key deviation process, according to an embodiment.
Fig. 5 schematically illustrates an embodiment of the Peer-Manager shared key deviation function.
Fig. 6 schematically illustrates an embodiment of how the seed pool state can evolve.
Fig. 7 schematically illustrates the application-level hybrid encryption process, according to an embodiment.
Fig. 8 is a flow chart illustrating the process to establish a session shared key between two application instances, according to an embodiment.

### DETAILED DESCRIPTION OF THE INVENTION AND OF PREFERRED EMBODIMENTS

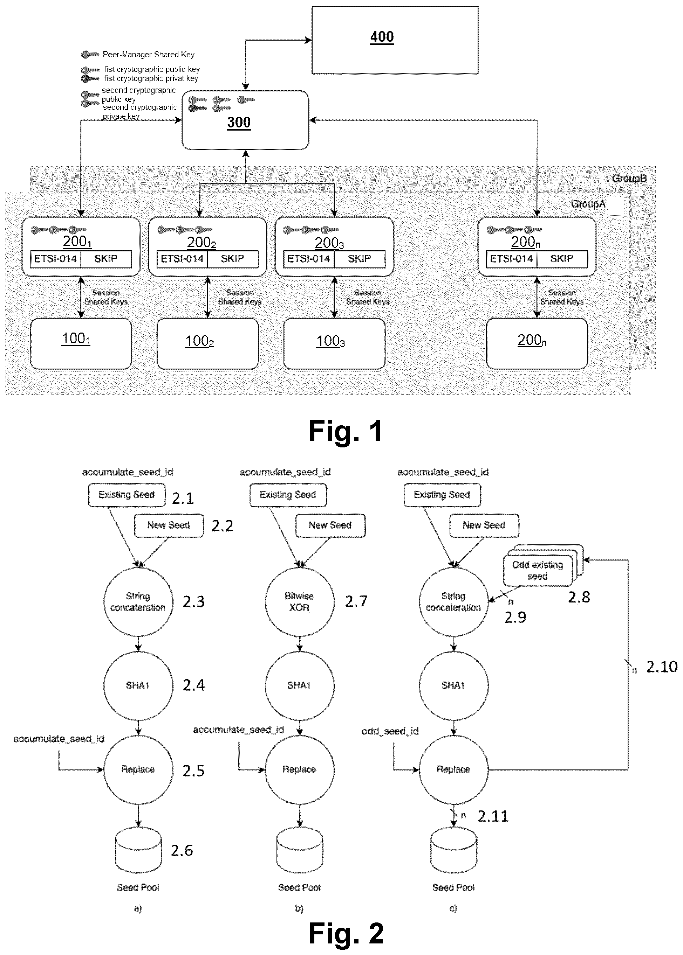

Fig. 1 shows an embodiment of the proposed system. Within this architecture, a group of machines, referred to as application instances 100, engage in communication amongst each other. Each application establishes a connection with another device known as a peer communication device (or simply peer) 200 using the ETSI-014 protocol or Cisco's SKIP protocol. All peers are linked to a centralized device termed the manager device 300. The manager device 300 provides a dashboard interface, accessible via a front-end 400 by other machines/devices.

For each peer 200, the manager device 300 creates two pairs of public/private keys: one pair for a first cryptographic protocol, particularly, RSA, and another for a second cryptographic protocol, particularly, PQC. The public keys for both cryptographic protocols are distributed to the peer 200. Please note that although RSA and PQC are preferable, other alternative cryptographic protocols could be equally used, for instance, the Diffie-Hellman or the ECIES-KEM for the first cryptographic protocol and the ML-KEM for the second cryptographic protocol, among others.

Moreover, for each peer 200, the manager device 300 also establishes a Peer-Manager Shared Key. This key changes dynamically according to a specific protocol, that is further detailed in the following.

The design objective of the proposal is to guarantee quantum-safe communication between each peer 200 and the manager device 300. To achieve this objective, two encryption mechanisms are combined to secure all data exchanged between a peer 200 and the manager device 300:
1. First, all messages are encrypted using the Peer-Manager Shared Key. This shared key is intended to mitigate the SNDL attack and make interception by any potential hacker nearly impossible.
2. Second, the already encrypted message is further encrypted by two random session keys, established between a peer 200 and the manager 300 utilizing the first and second cryptographic protocols.

For a successful interception of messages exchanged between a peer 200 and the manager device 300, the following conditions must be met. Firstly, the hacker must intercept all historical messages between the peer 200 and the manager device 300. Any lost message between the peer and the manager will make it impossible to regenerate the Peer-Manager Shared Key, resulting in the inability to decrypt the message. Secondly, the hacker needs access to a sufficiently powerful quantum computer to recover the session key exchanged using the second cryptographic protocol. Thirdly, current post-quantum cryptographic algorithms are not quantum-safe. This vulnerability could arise if new methods for breaking current post-quantum cryptographic proposals emerge in the near future.

While the second and third requirements depend on future advancements in quantum computing, the first requirement remains time-invariant and poses a significant challenge to both current and future hackers.

### Peer Manager Shared Key Deviation Process

The goal of the shared key deviation process is to establish a shared key between a peer 200 and the manager device 300. The process is designed to tolerate SNDL attacks and is composed by two concurrent subprocesses.

In the present invention, the manager device 300 can expose a set of REST APIs through which each peer 200 can request for information exchange. Additionally, it is assumed that each peer 200 is correctly registered in the manager device 300 and all messages are accurately identifiable.

### Random Shared Seed Pool Convergent Process

Peers 200 periodically send random strings, called seeds, to the manager device 300. For instance, this can be done using /*api*/*v1*/*SeedReport* API. Each seed is identified by a unique ID, called Seedld, and it is assigned by the manager device 300. All exchanged seeds are stored by both peer 200 and the manager device 300. As a result, a peer 200 and the manager device 300 shares a pool of seeds, called seed pool, with same state.

Using the /*api*/*v1*/*SeedReport* API, a peer 200 can change the state of the seed pool. For each API call, the peer 200 generates a message that contains a new random seed, together with the following data:
- pm_shared_key_id: It is the ID of a shared key between the peer 200 and the manager device 300 and it is used to encrypt the body.
- encrypted_body: contains all information encrypted and contains:
   ∘ *seed*: The random seed.
   ∘ *accumulate_func*: It is the identification of the function that should be performed. Several functions are available as will be explained next.
   ∘ *accumulate_seed_id*: The accumulate function may need a previously available seed as an input parameter. The value of *accumulate_seed_id* identifies the required input parameter.
   ∘ *deviation_seed_id*: This parameter is used in another process. In this case it is always null.

### Seed accumulate functions

The following accumulate functions are defined in the proposal:
- ADD: the new random seed will be added in the pool. This operation increases the number of available seeds in the pool.
- REMOVE: the seed identified by *accumulate_seed_id* is removed from the pool. The new seed is not inserted to the pool. This operation reduces the number of available seeds in the pool.
- ADD-REPLACE: the content of previously available seed (identified by *accumulate_seed_id*) is concatenated with new seed. The result is then hashed using SHA1 and it is used to replace the previous seed.
- XOR-REPLACE: the content of previously available seed (identified by *accumulate_seed_id*) is mixed with new seed using a bitwise-XOR operation. The result is then hashed using a hash function, e.g. the SHA1, and it is used to replace the previous seed.
- ADD-REPLACE-ODD: the same as ADD-REPLACE but combine the result with each seed with odd identification.
- ADD-REPLACE-EVEN: the same as ADD-REPLACE-ODD but affecting all seeds with even identification.

Fig. 2 shows an embodiment of three possible accumulate functions. Please note that while in the figure a single seed is used, in other embodiments, not shown, multiple seeds can be used together to deviate a new shared key.

Fig. 2a represents the ADD-REPLACE function. It first concatenates the value of the existing seed (2.1), identified by *aculumate_seed_id,* with the value of the new seed (2.2) in (2.3). The concatenated string is then hashed using SHA1 (2.4). The resulted hash is then used to replace the existing seed identified by *aculumate_seed_id.* Fig. 2b represents the XOR-REPLACE and works very similar to ADD-REPLACE. The only difference is step (2.7) where bitwise XOR operation is performed between the existing seed and the new seed. Fig. 2c represents the ADD-REPLACE-ODD. It performs n independent ADD-REPLACE functions where string concatenation step (2.9) concatenates 3 values: existing seed identified by *accumulate_seed_id,* new seed, and one of existing seeds with odd identification. For each existing seed (2.8) (with odd identification), it performs ADD-REPLACE, and the process repeats n times (2.10).

ADD-REPLACE-EVEN works very similarly but affecting to existing seeds with even identifiers.

Please note that the present invention does not exclude other seed accumulative functions to update the seed pool state. Specifically, other functions, like ADD-REPLACE-EVEN or ADD-REPLACE-ODD, that manipulate multiple seeds at same time could be defined in the implementation to increase the impact of arrival of a new seed.

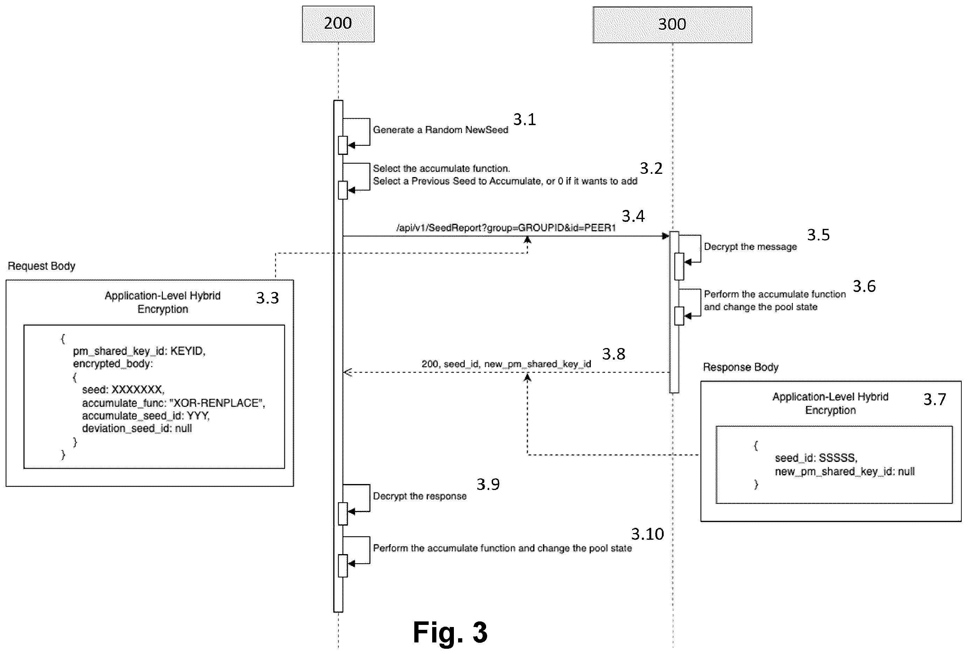

Fig. 3 shows an embodiment of the seed pool convergent protocol. A peer 200 can periodically call, for instance, using the /*api*/*v1*/*SeedReport* API provided by the manager device 300 to perform convergency. Therefore, first, the peer 200 generates a new random seed (3.1), which is just a random string. Then, it randomly selects the accumulation function that wants to perform. Notice that ADD and REMOVE function is selected when the peer 200 wants to increase or reduce the number of seeds in the pool. Once pool reaches to a certain size, only ADD-RENPLACE, XOR-RENPLACE, ADD-REPLACE-ODD and ADD-REPLACE-EVEN can be used. In these functions, the peer 200 also randomly selects a previously available seed to replace (3.2).

All information is encrypted by the proposed application-level hybrid encryption process (3.3). As a result, the peer 200 sends the encrypted message to the manager device 300 (3.4). The manager device 300 receives the message and decrypts it (3.5). It performs the accumulate function to change the state of the seed pool (3.6). The result of the function may change the content of a seed in the pool. The manager device 300 creates the message to response to the API call. The response message contains the identification of the affected seed. The full message is encrypted in (3.7) and delivered to the peer 200 in (3.8).

The peer 200 receives and decrypts the response in (3.9) and performs the same accumulate function to change the state of the seed pool (3.10).

### Peer-Manager (PM) Shared Key Deviation Process

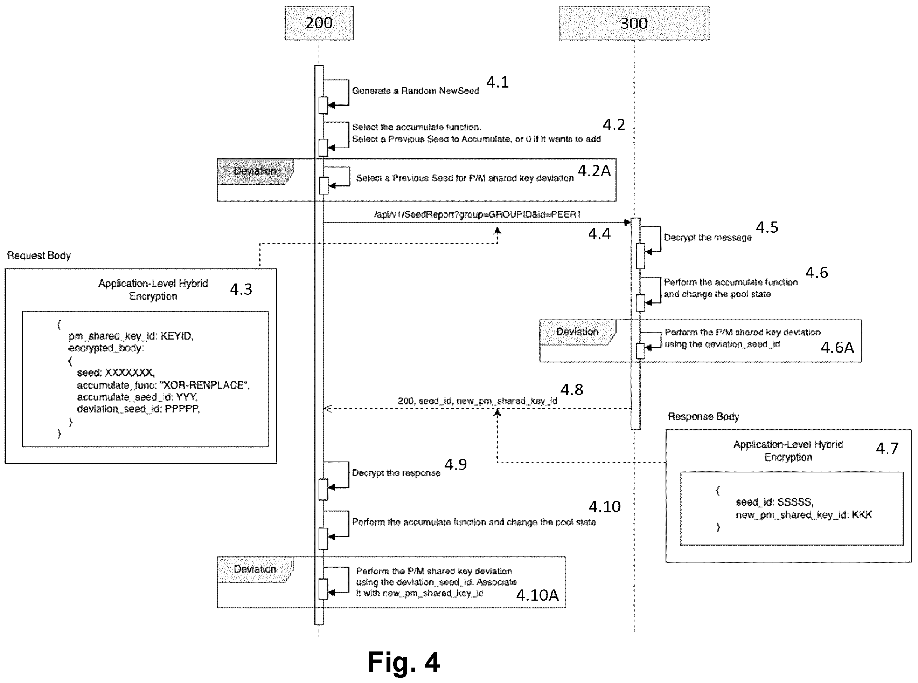

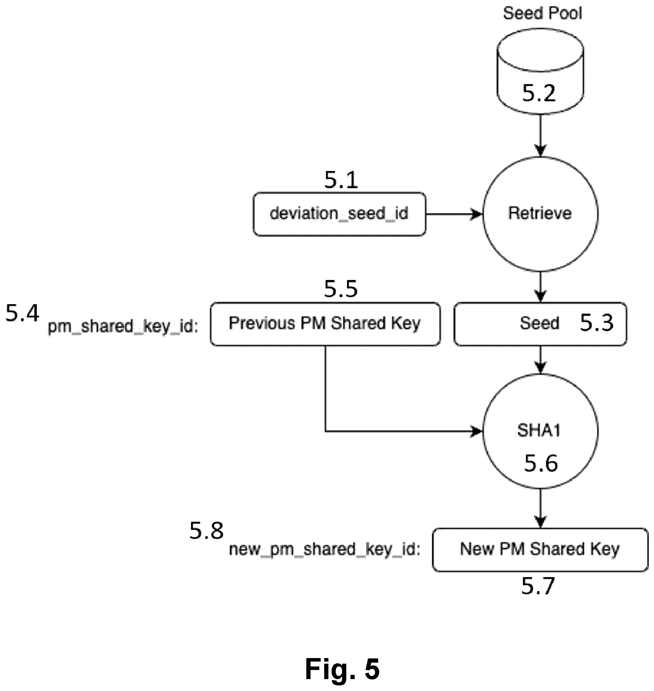

Each peer 200 can periodically decide to activate the PM shared key deviation process to generate a new shared key. Fig. 4 shows the process, which is identical to the Fig. 5, except for the following steps:
- (4.2A): In this step, the peer 200 selects a seed in the seed pool to be used for deviation process.
- (4.3): The unique identifier of the selected seed, in the step (4.2A), is included in the message that will be sent to the manager device 300 in (4.4).
- (4.6A): The manager device 300 performs the PM share key deviation and computes the new shared key. The new shared key is associated to an identifier.
- (4.7): The new shared key identifier is sent back to the peer 200 in (4.8).
- (4.10A): Peer 200 also performs the same deviation process and computes the new shared key. Peer 200 also associates the new shared key with the new_pm_shared_key_id, received in (4.8).

Fig. 5 shows the exact step that the peer 200 and the manager device 300 perform to deviate a new PM shared key. First, it retrieves the seed (5.3) from seed pool (5.2) using the identifier (5.1). The seed (5.3) and the previous PM shared Key (identified by pm_shared_key_id (5.4)) is then hashed, for example, by SHA1 (5.6), to produce a new PM shared key (5.7). The new key is then associated with a new identifier (5.8) and ready to be used for communication between the peer 200 and the manager device 300.

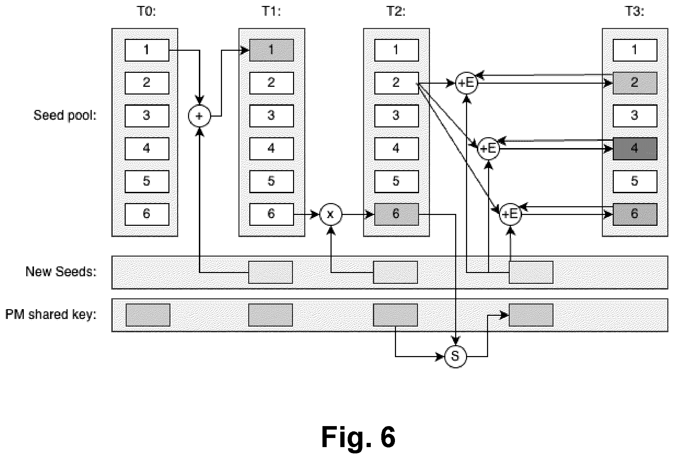

Fig. 6 illustrates the changes in the seed pool state upon the arrival of three new seeds. For the first seed arrival, the peer 200 chooses the ADD-REPLACE function with seed 1 to replace seed 1. In the second seed arrival, XOR-REPLACE is used to replace seed 6. For the third seed arrival, the system selects seed 2 to be replaced and seed 6 to derive a new peer manager shared key. In this example, the new shared key depends on 1) the initial seed 6, 2) the second seed arrival, and 3) the previous shared key. To determine the new shared key, it is necessary to intercept all 3 pieces of information. In the third seed arrival, ADD-REPLACE-EVEN function is used. In this case, it will affect all 3 seeds with EVEN identification (2, 4 and 6).

In the following, the mechanism for establishing the Peer-Manager Shared Key is described. This mechanism is designed to mitigate the SNDL attack. As illustrated in Fig. 6, the state of the seed pool changes continually due to the periodic arrival of seed messages. The Peer-Manager Shared Key is periodically refreshed using the state of the seed pool. Therefore, any successful interception of the shared key requires interception of all seed messages. If any seeds are lost, it may result in an inability to track the state of the seed pool, thereby making it impossible to compute the Peer-Manager shared key.

### Quantum Safe Application-Level Hybrid Encryption Process

This section explains the integration of the Peer-Manager share key with RSA and PQC encryption mechanisms to secure communications between a peer 200 and the manager device 300.

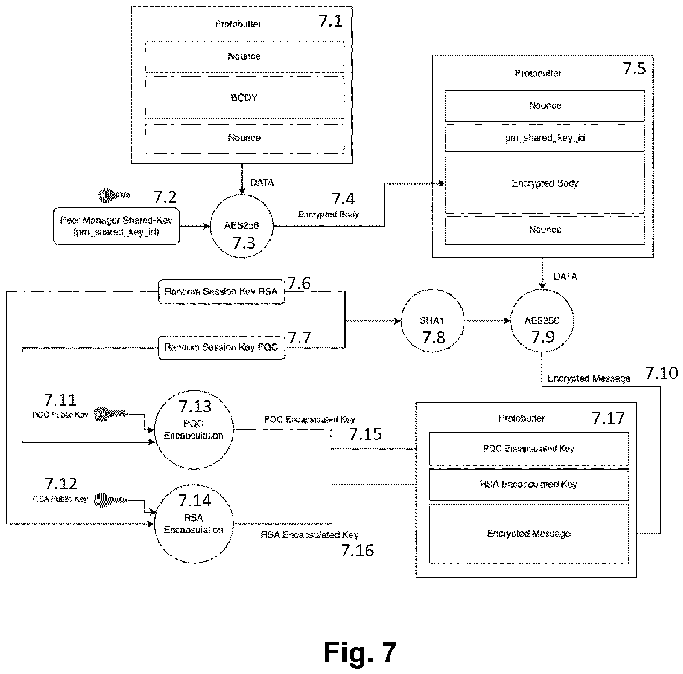

Whenever a peer 200 and the manager device 300 intend to exchange information, they perform an encryption process on the message body to secure the data. Fig. 7 shows the encryption procedure for the message body.

Initially, the message body is extended with two random or pseudo-random nonces and inserted into a first protocol buffer (7.1). The first protocol buffer is then serialized to generate the data that will be exchanged between the peer 200 and the manager device 300. This serialized data is subsequently encrypted using an advanced symmetric algorithm, for example, the AES256 (7.3), with the Peer Manager shared key (7.2), resulting in the creation of the encrypted message body (7.4).

The encrypted message body is embedded within a second protocol buffer (7.5) alongside the identifier of the Peer-Manager shared key (field *pm_shared_key_id)* and two random or pseudo-random nonces, which collectively produce the data that will be encrypted using AES256 (7.9). The key employed in AES256 (7.9) is derived from a SHA1 hash (7.8). The input to the SHA1 hash (7.8) consists of two random session keys (7.6) and (7.7). In this particular embodiment, the first random session key (7.6) comprises a Random Session Key RSA, which is encapsulated using RSA Encapsulation (7.14) to generate the RSA Encapsulated Key (7.16), while the second random the Random Session Key PQC (7.7) undergoes PQC Encapsulation (7.13) to create the PQC Encapsulated Key (7.15). Both encapsulations (7.13 and 7.14) utilize the public keys shared between the peer 200 and the manager device 300.

Subsequently, all related information (7.10, 7.15 and 7.16) is aggregated into a third protocol buffer (7.17), ready to be serialized and exchange between the peer 200 and the manager device 300.

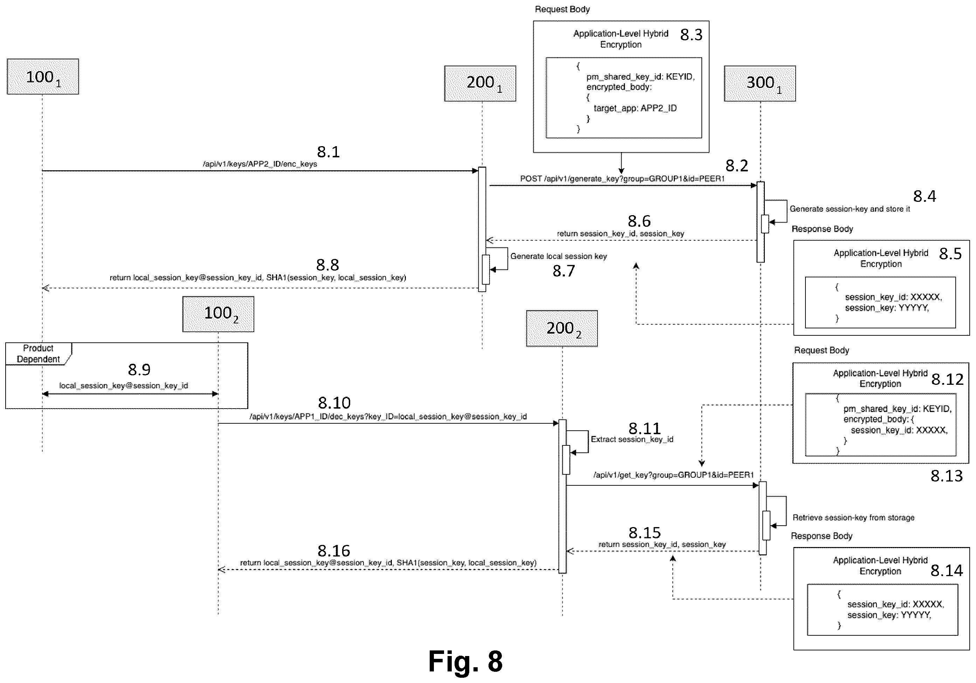

Fig. 8 shows an embodiment of the process for establishing a session shared key between two application instances 100₁ and 100₂ of the same group. An application session shared key is requested by the first application instance 100₁. Thus, the application instance 100₁ contacts its associated first peer communication device 200₁. For instance, this can be done using the REST API /*api*/*v1*/*keys*/*APP_ID*/*enc_keys* (8.1).

The first peer communication device 200₁ (3) as a result, communicates with the manager device 300 through the REST API (8.2) to request the generation of a new session shared key for the second application instance 100₂. The API body includes the identifier of the Peer-Manager shared key (*pm_shared_key_id*) and the identifier of the second application instance (APP2_ID). The entire body is encrypted to ensure quantum safety (8.3).

The Manager device 300 generates a session key (8.4), stores it in memory, and responds to the first peer communication device 200, (8.6). The response body (8.5) is also encrypted using the same mechanism as the request body.

The first peer communication device 200₁ generates a local session key (a random string) (8.7). The goal of local session key is to combine with the session key returned from the manager device 300 to create the final session shared key between the first peer communication device 200, and the second peer communication device 200₂. This process ensure that the manager device 300 do not has the visibility of the final session shared key. Particularly, the SHA1 is used to combine session key from manager device 300 and the local session key to create the final session shared key. The final session shared key is associated with an identifier which is local session key and session key id (from manager device 300) separated by a @.

In (8.8), the first peer communication device 200, replies to the first application instance 100₁ with all required information, including final session key identifier and the final session shared key. The final shared session key identifier is shared between the two application instances (8.9). The detailed process for 8.9 depends on the application design and it is out of scope of this proposal.

Once the second application instance 100₂ receives the final shared session key identifier, it requests the session key from the second peer communication device 200₂, for instance, using /*api*/*v1*/*keys*/*APP1_ID*/*dec_keys?key_ID=local_session_key_id@session_key_id* (8.10).

The second peer communication device 200₂ extracts the shared session key identifier (8.11) and calls the manager device 300 using the *get_key* API (8.12). The request body (8.13) is encrypted and contains the session key identifier. As the response, the manager device 300 retrieves the session key value from its memory, encrypts it (8.14) and sends it back to the second peer communication device 200₂ (8.15). The session key is then delivered to the second peer communication device 200₂. Both the *get_key* API request body and the response are encrypted using the same quantum-safe mechanism.

The second peer communication device 200₂ sends the final session key to the second application instance 100₂ (8.16). Notice the final session shared key is SHA1 of the session key, retrieved from the manager device 300, and the local session key. In this way, the manager device 300 does not know the final session key.

According to the present invention, hash functions different to SHA1 can be used. Likewise, regarding the PM shared keys, although the previous explanations are made by simply considering the usage of the previous one, in other embodiments, historical keys can be used.

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described, or entirely in software elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

Certain aspects of the present invention include process steps or operations and instructions described herein in an algorithmic and/or algorithmic-like form. It should be noted that the process steps and/or operations and instructions of the present invention can be embodied in software, firmware, and/or hardware, and when embodied in software, can be downloaded to reside on and be operated from different platforms used by real-time network operating systems.

The scope of the present invention is defined in the following set of claims.

## Claims

1. A method for secure communication between communicating devices, the method comprising:
associating a manager device (300) with a group of peer communication devices (200);
sharing, by the manager device (300), with each peer communication device (200₁, 200₂, ..., 200ₙ) of the group of peer communication devices (200):
a first cryptographic public key for a first cryptographic protocol,
a second cryptographic public key for a second cryptographic protocol, the latter comprising a post-quantum cryptographic protocol, and
a dynamically changeable Peer-Manager Shared Key; and
encrypting all messages exchanged between the manager device (300) and each peer communication device (200₁, 200₂, ..., 200ₙ) by means of a quantum-safe encryption mechanism, which comprises:
i) encrypting a message body using the Peer-Manager Shared key, and
ii) further encrypting the encrypted message body using random session keys exchanged using both the first cryptographic protocol and the second cryptographic protocol,
such that secure communication between each peer communication device (200₁, 200₂, ...,200ₙ) and the manager device (300) is guaranteed.

2. The method of claim 1, wherein each peer communication device (200₁, 200₂, ..., 200ₙ) and the manager device (300) maintain a seed pool with same state that changes dynamically, wherein each seed in the seed pool is identified by a unique identifier, which is assigned by the manager device (300) and is used for generating the Peer-Manager Shared Key.

3. The method of claim 2, further comprising changing, by a given peer communication device of the group of peer communication devices (200), a state of the seed pool by generating and sending to the manager device (300) a message comprising the identifier of the Peer-Manager Shared Key and an encrypted body message, the latter comprising:
a) a new random seed together with an accumulation function indicating which action is to be performed in the seed pool, or
b) a new random seed, an accumulation function indicating which action is to be performed in the seed pool, and the identifier of a previously available seed in the seed pool.

4. The method of claim 3, wherein the accumulation function comprises:
for a), an ADD function in which the new random seed is to be added into the seed pool; and
for b):
a REMOVE function in which the previously available seed is to be removed from the seed pool;
an ADD-REPLACE function in which a content of the previously available seed is concatenated with the new random seed, a result thereof being further hashed and used to replace the previously available seed in the seed pool;
a XOR-REPLACE function in which a content of the previously available seed is mixed with the new random seed, a result thereof being further hashed and used to replace the previously available seed in the seed pool;
an ADD-REPLACE-ODD function in which a content of the previously available seed is concatenated with the new random seed, a result thereof being further hashed and combined with the previously available seed with odd identification; or
an ADD-REPLACE-EVEN function in which a content of the previously available seed is concatenated with the new random seed, a result thereof being further hashed and combined with the previously available seed with even identification.

5. The method of claim 2, further comprising:
generating, by a given peer communication device of the group of peer communication devices (200), a new random seed;
selecting, by the given peer communication device, information comprising a given accumulation function indicating which action is to be performed in the seed pool and a given marker, the given marker indicating that the new random seed is to be added to the seed pool or indicating a previously available seed in the seed pool that is to be removed or replaced;
sending, by the given peer communication device, the selected information to the manager device (300), a request message body containing the selected information being encrypted via the quantum-safe encryption mechanism, wherein the manager device (300) upon reception, further decrypts the request message body, performs the accumulated function, and changes the state of the seed pool;
receiving, by the given peer communication device, from the manager device (300), the identifier of the added/removed/replaced seed, a response message body containing the identifier being encrypted via the quantum-safe encryption mechanism, the given peer communication device further decrypting the response message body and changing the state of the seed pool.

6. The method of claim 2, further comprising:
generating, by a given peer communication device of the group of peer communication devices (200), a new random seed;
selecting, by the given peer communication device, information comprising a given accumulation function indicating which action is to be performed in the seed pool and a given marker, the given marker indicating that the new random seed is to be added to the seed pool or indicating a previously available seed in the seed pool that is to be removed or replaced;
selecting, by the given peer communication device, a seed in the seed pool to be used for generating a new Peer-Manager Shared Key;
sending, by the given peer communication device, within a request message, the selected information together with the identifier of the selected seed to the manager device (300), a request message body being encrypted via the quantum-safe encryption mechanism, wherein the manager device (300) upon reception, further decrypts the request message body, performs the accumulated function, changes the state of the seed pool, computes the new Peer-Manager Shared Key using the identifier and provides a new identifier to the new Peer-Manager shared key;
receiving, by the given peer communication device, from the manager device (300), the new identifier, a response message body containing the new identifier being encrypted via the quantum-safe encryption mechanism, the given peer communication device in response, further decrypting the response message body and changes the state of the seed pool with the new Peer-Manager shared key and the new identifier.

7. The method of claim 1, wherein:
step i) comprises:
providing two random or pseudo-random nonces to the message body, obtaining an extended message body as a result, and storing the extended message body into a first protocol buffer;
obtaining first data by serializing the first protocol buffer; and
encrypting the first data using an advanced symmetric encryption algorithm with the Peer-Manager Shared Key, obtaining the encrypted message body as a result, the encrypted message body together with an identifier of the Peer-Manager Shared Key and two random or pseudo-random nonces being further stored in a second protocol buffer, obtaining second data as a result; and
step ii) comprises:
obtaining an encrypted message by encrypting the second data with the advanced symmetric encryption algorithm, a key used by the advanced symmetric encryption algorithm being derived from a hash function whose input comprises the random session keys, the latter comprising a first random session key of the first cryptographic protocol and a second random session key of the second cryptographic protocol;
encapsulating the first random session key of the first cryptographic protocol using the first cryptographic public key, generating a first cryptographic protocol encapsulated key as a result;
encapsulating the second random session key of the second cryptographic protocol using the second cryptographic public key, generating a second cryptographic protocol encapsulated key as a result; and
aggregating the obtained encrypted message, first cryptographic protocol encapsulated key, and second cryptographic protocol Encapsulated key within a third protocol buffer, which is ready to be serialized and exchanged between the manager device (300) and the peer communication device.

8. The method of claim 7, wherein the advanced symmetric encryption algorithm comprises an AES-256 algorithm.

9. The method of any one of the previous claims, wherein:
the first cryptographic protocol comprises the Rivest-Shamir-Adleman, RSA, the Diffie-Hellman, or the Elliptic Curve Integrated Encryption Scheme-KEM version, ECIES-KEM, protocol; and
the second cryptographic protocol comprises the post-quantum cryptography, PQC, or the Module-Lattice-based Key Encapsulation Mechanism, ML-KEM, protocol.

10. The method of claim 1, wherein each peer communication device (200₁, 200₂, ...,200ₙ) of the group of peer communication devices (200₁, 200₂, ..., 200ₙ) is further associated with a corresponding application instance (100₁, 100₂, ..., 100ₙ), the method further comprising:
receiving, by the manager device (300), from a first peer communication device (200₁), a message request for a shared session key to be used by its associated first application instance (100₁) to communicate with a second application instance (100₂), the message body of the message request comprising an identifier of the Peer-Manager Shared Key and an identifier of the second application instance (100₂), and being encrypted via the quantum-safe encryption mechanism;
generating and storing, by the manager device (300), the shared session key, and further forwarding the generated shared session key and an identifier of the shared session key to the first peer communication device (200₁), the shared session key and their identifier being forwarded within the message body of a response message that is encrypted using the quantum-safe encryption mechanism;
generating, by the first peer communication device (200₁), a first final shared session key for the first application instance (100₁) and the second application instance (100₂) by combining the shared session key with a first local session key using a cryptographic function, the first local session key being generated by the first peer communication device (200₁);
associating, by the first communication device (200₁), the first final shared session key with a first final shared session key identifier, the first final shared session key identifier including the first local session key and the identifier of the shared session key;
sending, by the peer first communication device (200₁), the associated first final shared session key and first final shared session key identifier to the first application instance (100₁), the first application instance further sharing the first final shared session key identifier with the second application instance (100₂), which, in response, further requests the shared session key to its associated second peer communication device (200₂);
receiving, by the manager device (300), from the second peer communication device (200₂), a message request for the shared session key, the message body of the message request comprising the identifier of the shared session key and being encrypted using the quantum-safe encryption mechanism, the manager device (300), in response, retrieving the shared session key, and further forwarding the shared session key and the identifier of the shared session key to the second peer communication device (200₂), the shared session key and their identifier being forwarded within the message body of a response message that is encrypted using the quantum-safe encryption mechanism;
generating, by the second peer communication device (200₂), a second final shared session key for the second application instance (100₂) by combining the shared session key with a second local session key using a cryptographic function, the second local session key being generated by the second communication device (200₂); and
associating, by the second peer communication device (200₂), the second final shared session key with a second final shared session key identifier, the second final shared session key identifier including the second local session key and the identifier of the shared session key; and
sending, by the second peer communication device (200₂), the associated second final shared session key and second final session shared key identifier to the second application instance (100₂).

11. The method of claim 10, wherein the cryptographic function used by the first and second peer communication devices (200₁, 200₂) in the generating step comprises a hash function.

12. A system for secure communication between communicating devices, comprising:
at least one peer communication device (200₁); and
a manager device (300) configured to share with the at least one peer communication device (200₁):
a first cryptographic public key for a first cryptographic protocol,
a second cryptographic public key for a second cryptographic protocol, the latter comprising a post-quantum cryptographic protocol, and
a dynamically changeable Peer-Manager Shared Key,
wherein all messages exchanged between the manager device (300) and the peer communication device (200₁) are encrypted using a quantum-safe encryption mechanism, which comprises encrypting a message body using the Peer-Manager Shared Key, and further encrypting the encrypted message body using random session keys exchanged using both the first cryptographic protocol and the second cryptographic protocol, such that secure communication between the peer communication device (200₁) and the manager device (300) is guaranteed.

13. The system of claim 12, wherein the first cryptographic protocol comprises the Rivest-Shamir-Adleman, RSA, the Diffie-Hellman, or the Elliptic Curve Integrated Encryption Scheme-KEM version, ECIES-KEM, protocol.

14. The system of claim 12 or 13, wherein the second cryptographic protocol comprises the post-quantum cryptography, PQC, or the Module-Lattice-based Key Encapsulation Mechanism, ML-KEM, protocol.

15. The system of claim 12, 13 or 14, wherein the peer communication device (200₁) and the manager device (300) are configured to maintain a seed pool with same state that changes dynamically, wherein each seed in the seed pool is identified by a unique identifier, which is assigned by the manager device (300) and is used for generating the Peer-Manager Shared Key.
